(19) Europäisches Patentamt

European Patent Office

Office européen des brevets

(11) **EP 1 591 501 A1**

(12) **EUROPEAN PATENT APPLICATION**
published in accordance with Art. 158(3) EPC

(43) Date of publication:
**02.11.2005 Bulletin 2005/44**

(51) Int Cl.[7]: **C09D 163/00**, C09D 175/04

(21) Application number: **04707632.8**

(86) International application number:
**PCT/JP2004/001057**

(22) Date of filing: **03.02.2004**

(87) International publication number:
**WO 2004/069945 (19.08.2004 Gazette 2004/34)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **04.02.2003 JP 2003026556**
**14.02.2003 JP 2003035840**

(71) Applicant: **Mitsui Chemicals, Inc.**
**Tokyo 105-7117 (JP)**

(72) Inventors:
- **ARIKAWA, Hideo, c/o Mitsui Chemicals, Inc.**
  **Sodegaura-shi, Chiba 299-0265 (JP)**
- **TANAKA, Toshiyuki, c/o Mitsui Chemicals, Inc.**
  **Sodegaura-shi, Chiba 299-0265 (JP)**

(74) Representative: **HOFFMANN EITLE**
**Patent- und Rechtsanwälte**
**Arabellastrasse 4**
**81925 München (DE)**

(54) **NONAROMATIC SOLVENT TYPE COATING RESIN COMPOSITION**

(57) The object of the invention is to provide a non-aromatic solvent-based coating resin composition excellent in adhesion to a material, corrosion resistance, processability, scratch resistance, corrosion resistance and solvent resistance with good balance among these properties. When a non-aromatic solvent is selected in the invention, attention was paid to the evaporation rate of a mixed solvent, SP value, and the viscosity of a solution containing epoxy resin dissolved in a solids content of 40%. The invention provides a non-aromatic solvent-based modified epoxy coating resin composition characterized by being dissolved in a solids content of 60% or less in a non-aromatic solvent selected according to condition (i):

Condition (i): a mixed solvent wherein every selected solvent is a non-aromatic solvent, satisfies the following equation (1), and shows a viscosity of 10,000 mPa·S or less upon forming a solution wherein the solids content of the modified epoxy resin composition dissolved in the solvent is 40%,

Equation (1): $SP = \Sigma C_i SP_i$

wherein SP is $9.0 \leq SP \leq 11.0$

EP 1 591 501 A1

**Description**

Technical Field

The present invention relates to a non-aromatic solvent-based coating resin composition excellent in adhesion to a material, corrosion resistance, solvent resistance, scratch resistance and processability, with good balance among these properties, and is useful in pre-coat metal, sizing agent for building material, automobile parts etc.

Background Art

Aromatic solvents are registered as chemical substances subject to a PRTR (pollutant release and transfer register) law. Their handling is a social issue because of environmental pollution due to their release to the air. Not only handling but also use of the aromatic solvents may be severely limited in future. Accordingly, there is an increasing need in recent years for development of coating resin compositions using only non-aromatic compounds, that is, those not using compounds subject to the PRTR law.

Under these circumstances, when non-aromatic solvents only are used in place of aromatic solvents in coating resin compositions, the selection of solvent and a change in the design of resin are required depending on intended use.

In thermosetting coating resin of one-pack type, for example, block urethane modified epoxy resin produced by modifying epoxy resin and mixing the resin with block isocyanate is used. A modified epoxy resin coating produced by dissolving such resin in a mixed solvent containing aromatic solvents is widely used. In using non-aromatic solvents, the solubility of resin and the evaporation rate of solvent at baking temperature for filmmaking are extremely important. When the compatibility of solvent with epoxy resin is low or when solvent though being compatible with resin gives a solution of extremely high viscosity, the resulting coating resin is problematic in operativeness.

As one-pack ordinary-temperatures- drying coating resin , a modified epoxy resin coating solution using modified epoxy resin and a mixed solvent containing aromatic solvents is widely used. Conventionally, the solvent used in this kind of resin is an aromatic mixed solvent which dissolves starting epoxy resin stably to give a coating of suitable viscosity, is excellent in film formability upon coating on an adherent, and after formation of a coating film, does not remain in the coating due to its rapid evaporation. For example, toluene and xylene are used as the aromatic solvents. These solvents have a suitable evaporation rate at ordinary temperatures, can thus be used to regulate the evaporation rate of their mixed solvent and can, upon dissolution of epoxy resin, increase the compatibility of the mixed solvent with the resin, to lower the viscosity of the resulting coating. In using a non-aromatic solvent, the solubility of the resin and the evaporation rate of the solvent after application are extremely important.

Disclosure of Invention

The present inventors made extensive study to solve these problems, and as a result, they paid attention to the evaporation rate of a mixed solvent, SP value, and the viscosity of a solution with a solids content of 40% produced by dissolving epoxy resin, and the present inventors was thereby completed. That is, the present invention relates to:

1. A non-aromatic solvent-based modified epoxy coating resin composition characterized by being dissolved in a solids content of 60% or less in a non-aromatic solvent selected according to condition (i):

Condition (i): a mixed solvent wherein every selected solvent is a non-aromatic solvent, satisfies the following equation (1), and shows a viscosity of 10, 000 mPa·S or less upon forming a solution wherein the solids content of the modified epoxy resin composition dissolved in the solvent is 40%,

$$\text{Equation (1):} \quad SP= \Sigma C_i SP_i$$

wherein SP is $9.0 \leq SP \leq 11.0$ whereupon $C_i$ (wt%) is the content of the selected solvent in the whole solvent, and $SP_i$ is the SP value of the selected solvent.

2. An one-pack thermosetting coating resin composition, wherein in the above-mentioned item 1, 95 to 70 parts (solids content) by weight of component A and 5 to 30 parts (solids content) by weight of component B are mixed in a total amount of 100 parts by weight (solids content), and 60% or less of the solids content is dissolved in the non-aromatic solvent selected according to condition (ii):

Component A: a modified epoxy resin composition containing (a) epoxy resin having an epoxy equivalent of 300 to 3,000 g/eq and (b) multifunctional amine, wherein active hydrogen in the component (b) is 1.10 to 1.

80 equivalents relative to 1.0 epoxy equivalent in the component (a),
Component B: block isocyanate,
Condition (ii): every selected solvent is a non-aromatic solvent and satisfies the following equation (2):

$$\text{Equation (2):} \quad V = \Sigma C_i V_i$$

wherein V is $18 \leq V \leq 100$ whereupon $C_i$ (wt%) is the content of the selected solvent in the whole solvent, and $V_i$ is the evaporation rate of the selected solvent, which is a relative rate assuming that the evaporation rate of butyl acetate is 100.

3. A coating resin composition drying at ordinary temperatures,
wherein the modified epoxy resin composition in the above-mentioned item 1 comprising amine modified epoxy having a number-average molecular weight of 4,000 to 10,000 obtained by adding (a) epoxy resin having an epoxy equivalent of 200 to 1, 000 g/eq to (b) multifunctional amine, wherein active hydrogen in the component (b) is 1.10 to 1.60 equivalents relative to 1. 00 epoxy equivalent in the component (a), satisfies condition (iii):

Condition (iii): every selected solvent is a non-aromatic solvent and satisfies the following equation (3):

$$\text{Equation (3):} \quad V = \Sigma C_i V_i$$

wherein V is $100 \leq V \leq 300$ whereupon $C_i$ (wt%) is the content of the selected solvent in the whole solvent, and $V_i$ is the evaporation rate of the selected solvent, which is a relative rate assuming that the evaporation rate of butyl acetate is 100.

4. The coating resin composition drying at ordinary temperatures according to the above-mentioned item 3, wherein the multifunctional amine (b) is a multifunctional alkanol amine (b1).

5. The coating resin composition drying at ordinary temperatures according to the above-mentioned item 3 or 4, wherein the multifunctional amine (b) is a mixture of the multifunctional alkanol amine (b1) and another multifunctional amine (b2), and the equivalent ratio of these components is 0.70 to 1.00/0 to 0. 30 wherein the total of both the components is 1. 00 equivalent.

6. The one-pack thermosetting coating resin composition or the coating resin composition drying at ordinary temperatures according to any one of the above-mentioned items 2 to 5, wherein the epoxy resin (a) is bisphenol A-diglycidyl ether or bisphenol F-diglycidyl ether.

7. A coating resin composition drying at ordinary temperatures, which comprises the coating resin composition drying at ordinary temperatures according to any one of the above-mentioned items 3 to 6 in combination with a diluting solvent which as a solvent added to the coating composition drying at ordinary temperatures is selected according to condition (iv-1):

Condition (iv-1): a non-aromatic mixed solvent containing at least 20 wt% cyclohexanone in the solvent.

Best Mode for Carrying Out the Invention

<Non-aromatic solvent>

The non-aromatic solvent handled in the present invention includes, for example, non-aromatic hydrocarbon solvents such as n-heptane, n-hexane, aromatics-free mineral spirit, dipentene, turpentine oil, cyclohexane, methylcyclohexane, ethylcyclohexane and isoparaffin solvents, alcohol solvents such as methanol, ethanol, n-propanol, isopropanol, n-butanol, isobutanol, sec-butanol, tert-butanol, n-amyl alcohol, isoamyl alcohol, 2-ethyl hexanol, methyl isobutyl carbinol and benzyl alcohol, ether alcohols and ether solvents such as methyl Cellosolve, Cellosolve solvent, butyl Cellosolve, isobutyl Cellosolve, tert-butyl Cellosolve, isopropyl Cellosolve, hexyl Cellosolve, methoxybutanol, 3-methyl-3-methoxybutanol,methyl Carbitol, Carbitol, butyl Carbitol, propylene glycol monomethyl ether, dipropylene glycol monomethyl ether, propylene glycol n-butyl ether, propylene glycol n-propyl ether, dipropylene glycol n-propyl ether, dioxane and propyl Cellosolve, ester and ether ester solvents such as methyl acetate, ethyl acetate, n-propyl acetate, isopropyl acetate, n-butyl acetate, isobutyl acetate, isoamyl acetate, methyl Cellosolve acetate, Cellosolve acetate, butyl Cellosolve acetate, methoxypropyl acetate, methoxybutyl acetate, Carbitol acetate, butyl Carbitol acetate, 3-methyl acetate-3-methoxy butanol, 3-ethoxy propionate ethanol, 2,2,4-trimethyl-1,3-pentadiol monoisobutyrate, and dibasic acid esters, ketone solvents such as acetone, methyl ethyl ketone, methyl isobutyl ketone, diisobutyl ketone, methyl n-hexylketone, methyl amyl ketone, cyclohexanone, diacetone alcohol and isophorone, and tetrahydrofuran, dimethylformamide etc. These solvents may be used singly or as a mixed solvent thereof.

The present invention is characterized by using a non-aromatic solvent wherein SP in the equation (1) below satisfies the relationship: 9.0 ≤ SP ≤ 11.0. The SP value of the solvent defined herein is calculated according to a chemical composition on page 51 in Fundamental Science of Coating (1977) (in Japanese), authored by Yuji Harasaki and published by Maki Shoten.

$$\text{Equation (1):} \qquad SP = \Sigma C_i SP_i$$

wherein $C_i$ (wt%) is the content of the selected solvent in the whole solvent, and $SP_i$ is the SP value of the selected solvent.

The non-aromatic solvent is a mixed solvent having a viscosity of 10, 000 mPa·S or less upon forming a solution wherein the solids content of the modified epoxy resin composition dissolved in the solvent is 40%.

<One-pack thermosetting coating resin>

Block urethane modified epoxy resin produced by crosslinking epoxy resin having reactive epoxy groups obtained by reacting a compound having phenol hydroxyl groups with epichlorohydrin, with an amine, polyamide or dibasic acid to form a polymer and then mixing the polymer with block isocyanate is used as the one-pack thermosetting coating resin. Amodified epoxy resin coating in solution produced by mixing the modified epoxy resin with a mixed solvent containing aromatic solvents is widely used. Performance such as corrosion resistance, adhesion, processability and scratch resistance is required.

However, when the evaporation rate of each solvent dissolving the epoxy resin serving as the starting material is not suitable at baking temperature, the resulting coating film still contains the solvent to lower the physical properties of the coating film if the evaporation rate of the solvent is low, while if the evaporation rate of the solvent is too high, cracking occurs to cause coating defects. Further, when various solvents are poor in compatibility with the epoxy resin, or when the solvents though being compatible with resin give a solution of extremely high viscosity, there arises a problem that the coating resin cannot be applied even if its solids content is regulated to a workable solids content.

Up to now, an aromatic solvent which has a suitable rate of evaporation, is excellent in compatibility with epoxy resin, does not increase the viscosity of a solution containing the resin dissolved therein, and has a suitable rate of evaporation, specifically a mixed solvent partially using toluene or xylene, is generally used thereby regulating the rate of evaporation of the solvent, increasing the compatibility of the resin with the mixed solvent and reducing the viscosity. Now, the rate of evaporation of the solvent used in the non-aromatic one-pack thermosetting coating resin is the one by which the rate of evaporation defined by equation (2) below satisfies 10≤V≤100. The rate of evaporation of solvent defined herein was calculated according to a formula shown in "Evaporation of Solvent" on page 45 in Coating and Paint (in Japanese), No. 339 (1981) authored by Takeyuki Tanaka, and then converted into an evaporation rate relative to that (= 100) of butyl acetate.

$$\text{Equation (2):} \qquad V = \Sigma C_i V_i$$

wherein $C_i$ (wt%) is the content of the selected solvent in the whole solvent, and $V_i$ is a rate of evaporation of the selected solvent, which is a relative rate assuming that the evaporation rate of butyl acetate is 100.

V in this range is preferable because no solvent remains in the coating film after baking and physical properties of the coating film are not deteriorated, and the coating film is free of defects without cracking at the time of baking. Preferably, V is in the range of 30 to 70.

The SP value defined by the equation (1) is in the range of 9.0 to 11.0. In this range, a stable homogenous varnish compatible well with the modified epoxy resin can be obtained. The SP value is preferably in the range of 9.50 to 10.50.

The resin composition used in the non-aromatic one-pack thermosetting coating resin of the present invention is characterized in that 95 to 70 parts (solids content) by weight of the following component A and 5 to 30 parts (solids content) by weight of the component B are mixed in a total of 100 parts by weight (solids content), and dissolved in a solids content of 60% or less in the selected non-aromatic solvent. The component A is a polymerized modified epoxy resin containing (a) epoxy resin having an epoxy equivalent of 300 to 3, 000 g/eq. and (b) multifunctional amine, wherein active hydrogen in the component (b) is 1.10 to 1.80 equivalents relative to 1.0 epoxy equivalent in the component (a), and the component B is block isocyanate.

Now, the epoxy resin (a) and multifunctional amine (b) as component A used in the present invention are described.

In the present invention, the epoxy resin (a) includes bisphenol A-diglycidyl ether, bisphenol F-diglycidyl ether, novolak glycidyl ether, hexahydrophthalic glycidyl ester, dimer acid glycidyl ester, tetraglycidyl aminodiphenyl methane, 3,4-epoxy-6-methylcyclohexylmethyl carboxylate, triglycidyl isocyanurate, 3,4-epoxycyclohexylmethyl carboxylate, polypropylene glycol diglycidyl ether, and diglycidyl ether having terminals modified with polybutadiene or polysulfide, preferably bisphenol A-diglycidyl ether, bisphenol F-diglycidyl ether. These compounds may be used singly or as a mixture of two or more thereof.

The epoxy equivalent thereof is in the range of 300 to 3000 g/eq. An epoxy equivalent in this range is preferable in respect of corrosion resistance and processability.

In the present invention, the multifunctional amine (b) is an amine having two ormore active hydrogen atoms in one molecule. Specific examples include isopropanol amine, monopropanol amine, monobutanol amine, monoethanol amine, diethylene triamine, ethylene diamine, propylamine, butylamine, isophorone diamine, tetrahydrofurfuryl amine, xylene diamine, diaminodiphenyl methane, diaminosulfone, octylamine, methaphenylene diamine, amylamine, hexylamine, octylamine, nonylamine, decylamine, triethylenetetramine, tetramethylenepentamine, tetraethylene pentamine, dimethylaminopropylamine, diethylaminopropylamine, N-aminoethyl piperazine, methacene diamine, diaminodiphenyl sulfone etc.

With respect to the compounding ratio of the component (b) in the present invention, it is necessary that the amount of active hydrogen in the component (b) be 1. 10 to 1.80 equivalents relative to 1.0 equivalent of epoxy group in the component (a).

The component (b) in this range is preferable in respect of gelation of the resin solution, water resistance etc.

Then, the method of producing the modified epoxy resin as the component A in the present invention is described. The modified epoxy resin can be obtained by reacting the epoxy resin (a) with the multifunctional amine (b) such that the active hydrogen in the component (b) is 1.10 to 1. 80 equivalents relative to 1.0 epoxy equivalent in the component (a), in the absence of a solvent or in the whole or a part of a mixed solvent selected according to the condition (equations (1) and (2)).

Now, the block isocyanate as the component B used in the present invention is described. In the present invention, the block isocyanate is obtained by reacting an isocyanate compound with an active hydrogen compound by a known method, to give a urethane prepolymer having an isocyanato group at the terminal and then reacting it with a blocking agent, to block the isocyanato group. These reactions are conducted in an active hydrogen-free solvent or in the absence of a solvent, wherein a known catalyst such as tertiary amine, organometal etc. may be used. The above solvent is also the selected solvent.

In the present invention, the isocyanate compound includes aliphatic isocyanates such as hexamethylene diisocyanate and trimethylhexamethylene diisocyanate; aromatic diisocyanates such as xylylene diisocyanate, 2,4-tolylene diisocyanate and 2,6-tolylene diisocyanate; alicyclic diisocyanates such as isophorone diisocyanate; and diisocyanate mixtures thereof and polymers thereof.

In the present invention, the active hydrogen compound includes divalent alcohols such as ethylene glycol, propylene glycol, 1,2-butylene glycol, 1,3-butylene glycol, 1,6-hexane diol, diethylene glycol, dipropylene glycol, neopentyl glycol, hydroxy pivalate, triethylene glycol, xylylene glycol and 1,4-butylene glycol; trivalent alcohols such as glycerin, trimethylol ethane, trimethylol propane and 1,2,6-hexanetriol; low-molecular polyols such as pentaerythritol; polyether polyols such as polyol propylene oxide or ethylene oxide adduct; and high-molecular polyols such as aliphatic acid-modified polyester polyols obtained by reacting low-molecular polyol with dicarboxylic acid. These may be used alone or as a mixture thereof.

The blocking agent which can be used in the present invention includes those based on phenol, lactam, oxime, imine, active methylene, acid amide, imide,and sulfite, among which the blocking agents based on phenol, lactam, oxime and imine are preferable. Specific examples include phenol-based blocking agents such as phenol, cresol, xylenol, nitrophenol, chlorophenol, ethyl phenol, p-hydroxydiphenyl, t-butylphenol, o-isopropylphenol, o-sec-butylphenol, p-nonylphenol, p-t-octylphenol, hydroxy benzoic acid and hydroxy benzoate; lactam-based blocking agents such as ε-caprolactam, δ-valerolactam, γ-butyrolactam and β-propiolactam; oxime-based blocking agents such as formamide oxime, acetoaldoxime, acetoxime, methyl ethyl ketoxime, diacetyl monoxime, benzophenone oxime and cyclohexanone oxime; and imine-based blocking agents such as ethylene imine and propylene imine.

With respect to the compounding ratio of the component A to the component B in the present invention, 95 to 70 parts (solids content) by weight of component A and 5 to 30 parts (solids content) by weight of component B should be compounded in a total of 100 parts by weight (solids content). When the solids content of the component B is less than 5 parts by weight, the coating film could not well cured at the time of thermosetting, thus failing to exhibit coating film performance, while when the amount is higher than 30 parts by weight, the coating film is too hard, thus bringing about phenomena such as cracking etc.

The embodiment of the present invention wherein the resin composition is produced from the components A and B is typically as follows. Bisphenol A epoxy resin or bisphenol F epoxy resin and the multifunctional amine (b) are dissolved in the selected solvent and polymerized in a nitrogen atmosphere at 70 to 150°C for 4 to 10 hours to give a resin solution (component A).

Separately, the block isocyanate (component B) is prepared as described above. The component A is mixed with the component B and diluted to a viscosity of about 3 to 50 poises with a solvent, to give a resin composition. The solvent used in dissolving the component A and in diluting the resin composition is a solvent selected according to the conditions (equations (1) and (2)).

The preparation method using the selected solvent includes a preparation method wherein both the components A and B are synthesized in the absence of a solvent, mixed, and dissolved in the selected solvent to give a resin solution, a preparation methodwherein the component A is synthesized in a state dissolved in the selected solvent and then the component B synthesized in the absence of a solvent is mixed therewith, optionally followed by adding the selected solvent, to prepare a resin solution, a preparation method wherein the component B is synthesized in a state dissolved in the selected solvent and then the component A synthesized in the absence of a solvent is mixed therewith, optionally followed by adding the selected solvent, to prepare a resin solution, and a preparation method wherein both the components A and B are synthesized in a state dissolved in the selected solvent, optionally followed by adding the selected solvent, to prepare a resin solution.

The solvent selected in the present invention is a mixed solvent showing a viscosity of 10,000 mPa·S or less upon forming a solution wherein the solids content of the modified epoxy resin composition dissolved in the solvent is 40%. When the epoxy resin composition is dissolved therein to give a solution with a viscosity higher than 10,000 mPa·S, the coating solution should be repeatedly applied in order to attain a dry coating film having a thickness of several to several tens μm even if the solution is diluted with the solvent to a suitable viscosity range, and before baking, sagging and cissing occur easily, and a large amount of residual solvent remains in the dry coating film.

In the present invention, the coating is produced according to a known method. That is, an corrosion-preventive pigment, an extender pigment, a leveling agent and various kinds of additives are added to the resin composition and then kneaded and dispersed by a disper, a sand mill, a ball mill or the like. The resulting coating is applied onto a base material directly, or after pretreatment, by a general coating method such as brushing, spray coating and various kinds of coater coating. The base material to which the coating can be applied includes various metal materials such as a cold-rolled steel plate, a zinc-plated steel plate, an alloyed zinc-plated steel plate, a chrome-plated steel plate, an aluminum-plated steel plate, a tin-plated steel plate, a lead-plated steel plate, a nickel-plated steel plate, an aluminum plate, a titanium plate, a stainless steel plate; plastic materials; inorganic materials etc.

The coating is applied onto a base material and then heated, whereby the blocking agent in the component B is dissociated to regenerate an isocyanato group, and the generated isocyanato group reacts with a hydroxyl group in the component A to form a cured coating film. In this reaction, the heating temperature is changed depending on the type of blocking agent, but is usually about 130 to 350°C, and the heating time is 20 seconds to several ten minutes.

<One-pack ordinary-temperature-drying coating resin >

In the one-pack ordinary-temperature-drying coating resin, the epoxy resin which has reactive epoxy groups obtained by reacting a compound having phenol hydroxyl groups with epichlorohydrin and which is crosslinked and polymerized with an amine, polyamide or dibasic acid is used. However, the resin of this type hardly gives one-pack resin comparable to two-pack epoxy resin particularly with respect to coating corrosion resistance and solvent resistance. First, whenmultifunctional alkanol amine (e.g. amine) having a primary hydroxyl group is used in the modified epoxy resin, there can be brought about improvements in adhesion to a base material and solvent resistance, but moisture resistance is deteriorated, and corrosion resistance is insufficient. When epoxy resin having high epoxy equivalent is used, or when the average molecular weight of the modified epoxy resin is increased, corrosion resistance, moisture resistance and solvent resistance are improved, but adhesion to a material is deteriorated.

The performance of the modified epoxy resin and the coating film described above is considered attributable mainly to properties (covalent bonding strength, hydrophilicity, polarity etc.) and amount of primary hydroxyl groups in the resin. That is, when the primary hydroxyl groups in the resin are increased, the resin bonds covalently to water in the surface of a base material, thus improving adhesion to the base material, but the resin is hydrophilic so that water from the outside is incorporated to deteriorate the moisture resistance and corrosion resistance of the coating film. Further, this resin has polarity thus decreasing solubility in, or compatibility with, an organic solvent, while increasing the solvent resistance of the coating film.

Up to now, an aromatic solvent which has a suitable rate of evaporation, is excellent in compatibility with epoxy resin, does not increase the viscosity of a solution containing the resin dissolved therein, and has a suitable rate of evaporation, specifically a mixed solvent partially using toluene or xylene, is generally used thereby regulating the rate of evaporation of the solvent, increasing the compatibility of the resin with the mixed solvent and reducing the viscosity. Now, the rate of evaporation of the solvent used in the non-aromatic one-pack ordinary-temperature-curing coating resin is the one by which the rate of evaporation defined by equation (3) below satisfies $100 \leq V \leq 300$. The rate

of evaporation of solvent defined herein was calculated according to a formula shown in "Evaporation of Solvent" on page 45 in Coating and Paint (in Japanese), No. 339 (1981) authored by Takeyuki Tanaka, and then converted into an evaporation rate relative to that (= 100) of butyl acetate.

$$\text{Equation (3):} \qquad V = \Sigma C_i V_i$$

wherein $C_i$ (wt%) is the content of the selected solvent in the whole solvent, and $V_i$ is a rate of evaporation of the selected solvent, which is a relative rate assuming that the evaporation rate of butyl acetate is 100.

V in this range is preferable because no solvent remains in the coating film after drying and physical properties of the coating film are hardly deteriorated, and the solvent is not rapidly evaporated during drying so that the coating film is free of defects without deteriorating the outward appearance. Preferably, V is in the range of 150 to 250.

The SP value defined by the equation (1) is in the range of 9.0 to 11.0. In this range, a stable homogenous varnish compatible well with the modified epoxy resin can be obtained. The SP value is preferably in the range of 9.50 to 10.50.

In the resin composition used in the non-aromatic one-pack ordinary-temperature-curing coating resin of the present invention, it is effective to blend the epoxy resin having a specific epoxy equivalent with a multifunctional alkanol amine as a crosslinking agent in a specific ratio, whereby the resulting amine modified epoxy resin can have a molecular weight in a specific range.

That is, the present invention relates to a coating resin composition drying at ordinary temperatures, which comprises amine modified epoxy having a number-average molecular weight of 4,000 to 10,000 obtained by adding (a) epoxy resin having an epoxy equivalent of 200 to 1, 000 g/eq to (b) multifunctional amine, wherein active hydrogen in the component (b) is 1.10 to 1.60 equivalents relative to 1.00 epoxy equivalent in the component (a).

Now, the epoxy resin (a) and the multifunctional amine (b) used in the present invention are described.

In the present invention, the epoxy resin (a) includes bisphenol A-diglycidyl ether, bisphenol F-diglycidyl ether, novolakglycidylether, hexahydrophthalic glycidyl ester, dimer acid glycidyl ester, tetraglycidyl aminodiphenyl methane, 3,4-epoxy-6-methylcyclohexylmethyl carboxylate, triglycidyl isocyanurate, 3,4-epoxycyclohexylmethyl carboxylate, polypropylene glycol diglycidyl ether, and diglycidyl ether having terminals modified with polybutadiene or polysulfide, preferably bisphenol A-diglycidyl ether, bisphenol F-diglycidyl ether. These compounds may be used singly or as a mixture of two or more thereof.

The epoxy equivalent is in the range of 200 to 1,000 g/eq, preferably 450 to 1,000 g/eq. An epoxy equivalent in this range is preferable in respect of the compatibility of the resulting resin solution and the corrosion resistance, solvent resistance and adhesion of the coating film.

In the present invention, the multifunctional amine (b) is an amine having two or more active hydrogen atoms in one molecule, and is divided into multifunctional alkanolamine (b1) and other multifunctional amine (b2). The former multifunctional alkanolamine (b1) includes isopropanol amine, monopropanol amine, monobutanol amine, monoethanol amine and 2-aminoethylethanol amine, among which monoethanol amine is preferable. The latter other multifunctional amine (b2) includes diethylene triamine, ethylene diamine, butylamine, propylamine, isophorone diamine, xylene diamine, diaminodiphenyl methane, diaminosulfone, octylamine, methaphenylene diamine, butylamine, amylamine, hexylamine, octylamine, nonylamine, decylamine, triethylene tetramine, tetraethylene pentamine, diethylaminopropylamine, N-aminoethyl piperazine, mencene diamine, diaminodiphenyl sulfone etc.

As the multifunctional amine (b) in the present invention, the multifunctional alkanol amine (b1) and/or other multifunctional amine (b2) may be used, and preferably one or more kinds of multifunctional alkanol amine (b1) are used. When the multifunctional alkanol amine (b1) is used in combination with the other multifunctional amine (b2), the equivalent ratio of these components is preferably 0.70 to 1.00/0 to 0.30 (total of both the components: 1.00 equivalent). When the equivalent ratio is 0 to 0.70/0.30 to 1.00, the resulting coating film is poor in corrosion resistance, and also inferior in solvent resistance and adhesion to a base material.

In the present invention, it is necessary that the epoxy resin (a) and the multifunctional amine (b) are compounded in a specific equivalent ratio, and also that the molecular weight of the resulting amine modified epoxy resin is in a specific range. The components (a) and (b) are compounded such that active hydrogen in the component (b) is in the range of 1.10 to 1.60 equivalents, preferably 1.10 to 1.40 equivalents, relative to 1.00 epoxy equivalent in the component (a). This range is preferable in respect of gelation of the resin solution, water resistance etc. The number-average molecular weight of the amine modified epoxy resin is in the range of 4,000 to 10,000. When the molecular weight is less than 4,000, the resulting coating film is made rigid, and the processability and impact resistance thereof are deteriorated. On the other hand, when the molecular weight is higher than 10, 000, the resisting resin is deficient in primary hydroxyl groups, and thus the adhesion of the coating film to a base material is deteriorated.

For production of this amine modified epoxy resin in the present invention, the epoxy resin (a) is dissolved in a solvent, and the multifunctional amine (b) is added to the solution, and the mixture is polymerized by addition reaction at 70 to 150°C in a nitrogen atmosphere for 4 to 10 hours and then diluted with a selected solvent to attain a viscosity of about 5 to 70 poises, to give a resin solution. The resin solution can also be prepared using a diluting solvent selected as a solvent added to improve the operativeness and outward appearance of a coating film.

The solvent selected in the present invention is a mixed solvent showing a viscosity of 10,000 mPa·S or less upon forming a solution wherein the solids content of the modified epoxy resin composition dissolved in the solvent is 40%. When the epoxy resin composition is dissolved therein to give a solution with a viscosity higher than 10,000 mPa·S where the solids content of the composition is 40%, the coating solution should be repeatedly applied in order to attain a dry coating film having a thickness of several to several tens μm even if the solution is diluted with the solvent to a suitable viscosity range, and before baking, sagging and cissing occur easily, and a large amount of residual solvent remains in the dry coating film.

In the present invention, the usable solvent added to improve the operativeness and outward appearance of the coating film is an non-aromatic solvent selected from the condition (iv-1): a non-aromatic mixed solvent containing at least 20 wt% cyclohexanone in the solvent, preferably from the condition (iv-2) : a non-aromatic mixed solvent containing at least 40 wt% cyclohexanone in the solvent. When the content of cyclohexanone in the mixed solvent is less than 20 wt%, separation occurs after mixing with the resin solution, and the resin solution is made turbid, thus failing to give a stable resin composition. These solvents may be used as a diluent for regulation before production of the coating, or as a diluent during production of the coating or as a diluent for regulation after production of the coating.

In the present invention, the coating is produced according to a known method. That is, an corrosion-preventive pigment, an extender pigment, a leveling agent and various kinds of additives are added to the resin composition and kneaded and dispersed by a disper, a sand mill, a ball mill or the like. The resulting coating is applied onto a base material directly, or after pretreatment, by a general coating method such as brushing, spray coating and various kinds of coater coating. The base material to which the coating can be applied includes various metal materials such as a cold-rolled steel plate, a zinc-plated steel plate, an alloyed zinc-plated steel plate, a chrome-plated steel plate, an aluminum-plated steel plate, a tin-plated steel plate, a lead-plated steel plate, a nickel-plated steel plate, an aluminum plate, a titanium plate, a stainless steel plate; plastic materials; inorganic materials etc.

Examples

Hereinafter, the present invention is described in more detail by reference to the Examples and Comparative Examples. Hereinafter, the "parts" and "%" are based on weight, and the functional amines as the component (b) and some solvents are expressed by the following abbreviations:

| | |
|---|---|
| iPa | isopropanol amine |
| IPA | isopropyl alcohol |
| MEA | monoethanol amine |
| PA | propylamine |
| BA | butylamine |
| MBA | monobutanol amine |
| n-BA | n-butyl alcohol |
| PMA | propylene glycol monomethyl ether acetate |
| MA | 3-methoxy acetate |
| MEK | methyl ethyl ketone |
| MCH | methyl cyclohexane |
| PM | propylene glycol monomethyl ether |
| sec-BuOH | sec-butyl alcohol |
| n-BA | n-butyl alcohol |
| PEAC | propylene glycol monoethyl ether acetate |

Further, the type of the epoxy resin as the component (a) are expressed by the following abbreviations:

| | |
|---|---|
| BP-A | bisphenol A-diglycidyl ether epoxy resin |
| BP-F | bisphenol F-diglycidyl ether epoxy resin |

The methods of evaluating physical properties of coating film are as follows:

<Evaluation of physical properties of coating film>

(1) Outward appearance of resin: In the first half of the production example, the synthesized epoxy resin solution (solids content 40%) was introduced into a 100 cc glass bottle equipped with a cap and then kept in a thermostatic chamber at 25°C for 24 hours, and the outward appearance of the resin was confirmed with naked eyes.
○, transparent; ×, there were abnormalities such as turbidity, separation of the resin from the solvent, gelation, etc.
(2) Resin viscosity: In the first half of the production example, the viscosity of the synthesized epoxy resin solution (solids content 40%) was measured at 25°C by a B-type viscometer according to JIS-K 6901.
(3) Corrosion resistance: A cross-shaped cut was given to the surface of a test plate until the cut reached to a base material. This test plate was tested for 1000 hours according to a saline spraying test JIS-Z 2371. Thereafter, the cut was removed with an adhesive tape (manufactured by Nichiban) to measure the width of the removed coating film, on the basis of which corrosion resistance was evaluated in 5 ranks:
◎, 0 to 1 mm; ○, 1 to 2 mm; Δ, 2 to 3 mm; ×, 3 to 5 mm; and ××, 5 mm or more
(4) Moisture resistance: A test plate was placed in a moistening testing machine (49°C×98% RH) and left for 1000 hours. Thereafter, the state of blisters generated on the coating film was observed with naked eyes, on the basis of which corrosion resistance was evaluated in 5 ranks:
◎, not abnormal; ○, 1 to 5 blisters; Δ, 5 to 10 blisters; ×, 10 to 20 blisters; and ××, blisters on the whole surface.
(5) Processability: A test plate was bent such that the surface of the coating film was directed outwards, and the resistance of the coating film to cracking caused by a difference in elongation between the upper and lower faces of the coating film was examined. The bent portion was removed with an adhesive tape (Nichiban), and the state of removal was observed with naked eyes, on the basis of which processability was evaluated in 5 ranks:
◎, not removed; ○, slightly removed; Δ, removed to an extent of about 1/3; ×, removed to an extent of half or more; and ××, removed almost.
(6) Scratch resistance: An unused coin was pressed at an angle of 45° against the coating film and drawn with force toward the experimenter. The state of scratch on the coating film was observed with naked eyes, on the basis of which scratch resistance was evaluated in 5 ranks.
◎, no scratch; ○, slight scratch; Δ, scratch reaching the prime coating; ×, scratch reaching a part of the base material; and ××, the coating film was removed or the base material was scratched.
(7) Impact resistance: Impact resistance was tested with a flexural impact testing machine according to method JIS-K 5400. 6. 13. 3B. Hitting frames [literal trans.] having a radius of 6.35±0.03 mm were used, and a test plate having the coating film facing downwards was sandwiched therebetween. A weight (mass 1000±1 g) was dropped from a height of 50 cm onto the top of the hitting frames, and the broken state of the coating film was observed with naked eyes, on the basis of which impact resistance was evaluated in 5 ranks:
◎, not abnormal; ○, slight cracking; Δ, cracking on the whole surface; ×, partially removed; and ××, wholly removed.
(8) Pencil hardness: The hardness of a test plate was evaluated according to a pencil scratching test JIS-K 5400. 6. 14.
(9) Adhesion: The adhesion of the coating film to a test plate was evaluated in 5 ranks according to a crosscut test JIS-K 5400. 6. 15.
◎, 100/100; ○, 99/100 to 80/100; Δ, 79/100 to 50/100; ×, 49/100 to 30/100; and ××, less than 29/100.

Production Examples 1 to 7 (production of a mixed solvent)

According to the ratio (weight%) shown in Table 1, solvents were mixed to give a mixed solvent.

Production Example 8 (Production of block isocyanate)

Polypropylene glycol (number-average molecular weight 2000) was reacted with 2,4-tolylene diisocyanate to form an urethane derivative, then its isocyanato group was blocked with ε-caprolactam, and the product was dissolved in a mixed solvent shown in Table 1 to prepare a block isocyanate (solids content 70%).

Production Example 9 (Production of modified epoxy resin composition)

A four-necked glass flask (equipped with a stirrer, a thermometer, an external heater, a cooling tube, a condenser and a nitrogen inlet tube) was charged with 1200 parts of a mixed solvent shown in Table 1 and 1000 parts of bisphenol A epoxy resin (epoxy equivalent 1000 g/eq) according to Table 2, and the resin was dissolved in the solvent.

Then, 67 parts of iPA (active hydrogen equivalent: 37.5 g/eq) were added to the resulting solution and reacted at 100°C for 5 hours. After the reaction, the reaction solution was cooled to 60°C or less and then diluted with 400 parts of a mixed solvent shown in Table 1, to give a resin solution having a solids content of 40%. Then, 217 parts of a mixed solvent shown in Table 1 were added such that the solids content was reduced to 37%, and 337 parts of the block isocyanate (solids content 70%) obtained in each of the Production Examples above to give a resin composition having a solids content of 40%.

Then, 72 parts of titanium oxide (trade name: R-920, manufactured by Dupont) and 24 parts of strontium chromate (manufactured by Kikuchi Shikiso Kogyo) were blended as pigments with 200 parts of each resin composition, kneaded and dispersed with a sand mill, followed by dilution thereof with 60 parts of a mixed solvent shown in Table 1, to give a coating. In this case, the ratio of the pigments in total/solids content of the resin composition was 1.2/1.0 by weight, and the ratio of titanium oxide/strontium chromate was 75/25 by weight, and the amount of the solvent was regulated such that the viscosity of the resulting coating was 90 to 110 seconds (Ford cup #4).

Example 1

This coating was applied by a bar coater onto a zinc phosphate-treated steel plate (150 mm×70 mm×0.8 mm thickness), and the thickness of the film was regulated to be 5 μm as a prime coating. A commercial coil coating was coated thereon to a thickens of 15 μm to form a top coating. After coating, the steel plate was baked under the conditions of 210°C×45 seconds for the prime coating and 210°C×60 seconds for the top coating, to prepare a test plate. Physical properties of the coating film on this test plate were evaluated by a method described later. The results are shown in Table 3.

Examples 2 to 9 and Comparative Examples 1 to 9

Resin compositions (Production Examples 10 to 15) were obtained in the same manner as in Production Example 9 except that the mixed solvent shown in Table 1 was used, and the type and amount of each component was changed as shown in Table 2. Then, coatings and then test plates were obtained in the same manner as in Example 1 except that these resin compositions were used, and the test plates were evaluated. The results are sown in Tables 3 and 4.

Production Examples 16 to 23 (Production of mixed solvent)

Solvents were mixed according to the ratio (weight%) shown in Table 5 to give a mixed solvent.

Production Examples 24 and 25 (Production of diluting solvent)

Solvents were mixed according to the ratio (weight%) shown in Table 6 to give a mixed solvent.

Production Example 26 (Production of modified epoxy resin)

A four-necked glass flask (equipped with a stirrer, a thermometer, an external heater, a cooling tube, a condenser and a nitrogen inlet tube) was charged with 1000 parts of BP-A (epoxy equivalent 450 g/eq) and 1000 parts of the selected mixed solvent (Table 1, Production Example 1), the resin was dissolved in the solvent, and after dehydration under reflux, 95 parts of i-PA were added thereto and reacted at 100°C for 5 hours. After the reaction, the reaction solution was cooled to 60°C or less and then diluted with 500 parts of the selected mixed solvent (Table 1, Production Example 1), to give a resin solution having a number-average molecular weight of 7,000, a solids content of 40% and a viscosity of 30 poises. Then, 60 parts of titanium oxide (trade name: R-920, manufactured by Dupont), 20 parts of aluminum phosphormolybdate (manufactured by Kikuchi Shikiso Kogyo) and the selected mixed solvent (Table 2, Production Example 9) were blended with 200 parts of the resin solution, kneaded and dispersed with a sand mill, to give a coating having a viscosity of 90 to 110 seconds (Ford cup #4).

Example 10

This coating was applied by an air spray onto a zinc phosphate-treated steel plate (150 mm×70 mm×0.8 mm thickness), and the thickness of the film was regulated to be 20 μm. After coating, the steel plate was left and dried at 20°C×7 days, to prepare a test plate. Physical properties of the coating film on this test plate were evaluated by a method described later. The results are shown in Table 8.

Examples 11 to 19 and Comparative Examples 10 to 19

Resin compositions were obtained in the same manner as in Example 26 except that a mixed solvent shown in Table 5 was used, a mixed solvent shown in Table 6 was used in dilution, and the type and amount of each component were changed as shown in Table 7. Then, coatings and then test plates were obtained in the same manner as in the latter half of Production Example 26 that these resin compositions were used, and the test plates were evaluated. The results are shown in Tables 8 and 9. Method of measuring molecular weights: The modified epoxy resin produced in each of the Production Examples was dissolved in tetrahydrofuran and then measured for its molecular weight by RI with Shodex GPC-101 (manufactured by Showa Denko) with polystyrene of known molecular weight.

The evaluation results are collectively shown in Tables 8 and 9.

Table 1

| (Composition of mixed solvent) | | | | | | | | | | |
|---|---|---|---|---|---|---|---|---|---|---|
| Solvent | Rate of evaporation (Vi) | Sp value (SPi) | Production Example 1 | Production Example 2 | Production Example 3 | Production Example 4 | Production Example 5 | Production Example 6 | Production Example 7 |
| PMA | 34 | 9.2 | 5 | 30 | 15 | 5 | 5 | | 5 |
| Butyl acetate | 100 | 8.5 | 30 | | | | | | |
| Cyclohexanone | 25 | 9.9 | 35 | 30 | 15 | | 10 | 5 | 5 |
| n-BA | 45 | 11.4 | 20 | 25 | 25 | 30 | | | 85 |
| MA | 15 | 8.9 | 10 | 13 | 15 | 5 | 85 | 30 | 5 |
| Ethyl acetate | 525 | 9.1 | | | | 30 | | 5 | |
| PM | 66 | 10.2 | | | 30 | | | | |
| MEK | 465 | 9.3 | | | | 30 | | | |
| MCH | 320 | 8.2 | | | | | | 30 | |
| PEAC | | | | | | | | 30 | |
| Physical properties of mixed solvent | Rate of evaporation (V) | | 51.0 | 30.9 | 42.2 | 313.0 | 17.0 | 134.6 | 42.0 |
| | Sp value (SP) | | 9.6 | 9.7 | 10.1 | 9.8 | 9.0 | 8.7 | 11.1 |

Table 2

| (Composition of epoxy resin) | | | | | | | | |
|---|---|---|---|---|---|---|---|---|
| Production Examples | | 9 | 10 | 11 | 12 | 13 | 14 | 15 |
| (a) | Epoxy resin | BP-A | BP-F | BP-A | BP-F | BP-A | BP-A | BP-F |
| | Epoxy equivalent (g/eq) | 1000 | 1000 | 2500 | 2500 | 400 | 1000 | 1000 |
| | Amount (parts) | 1000 | 1000 | 1000 | 1000 | 1000 | 1000 | 1000 |
| (b) | Multifunctional amine | IPA | PA | MEA | BA | iPA | iPA | iPA |
| | Active hydrogen equivalent (g/eq) | 37.5 | 29.5 | 30.5 | 36.5 | 37.5 | 37.5 | 29.5 |
| | Amount (parts) | 67 | 53 | 21.4 | 18.3 | 140 | 72 | 30.7 |
| Active hydrogen in component (b)/ epoxy group in component (a) | | 1.79 | 1.80 | 1.75 | 1.25 | 1.45 | 1.92 | 1.04 |

## Table 3 (Examples)

| | | Examples | | | | | | | | |
|---|---|---|---|---|---|---|---|---|---|---|
| | | 1 | 2 | 3 | 4 | 5 | 6 | 7 | 8 | 9 |
| Mixed Solvent Production Example | | 1 | 1 | 1 | 1 | 1 | 2 | 2 | 3 | 3 |
| Epoxy Resin Production Example | | 9 | 10 | 11 | 12 | 13 | 9 | 10 | 11 | 12 |
| Component A/component B (solids content ratio by weight) | | 85/15 | 85/15 | 85/15 | 85/15 | 85/15 | 85/15 | 87/13 | 90/10 | 75/25 |
| Evaluation results of coating film | Outward appearance of resin | good | good | good | good | good | good | good | good | good |
| | Resin viscosity (mP·a) | 1000 | 700 | 1100 | 800 | 1000 | 900 | 600 | 800 | 900 |
| | Corrosion resistance | ⊙ | ⊙ | ⊙ | ⊙ | O | ⊙ | O | ⊙ | O |
| | Moisture resistance | ⊙ | ⊙ | ⊙ | ⊙ | ⊙ | ⊙ | ⊙ | ⊙ | ⊙ |
| | Processability | ⊙ | O | ⊙ | O | O | ⊙ | O | ⊙ | O |
| | Scratching | O | ⊙ | O | O | ⊙ | O | O | O | ⊙ |
| | Impact resistance | ⊙ | ⊙ | ⊙ | O | O | ⊙ | ⊙ | ⊙ | O |
| | Pencil strength | 2H | 2H | 2H | 2H | 2H | 2H | 2H | 2H | 2H |
| | Adhesiveness | ⊙ | ⊙ | ⊙ | ⊙ | ⊙ | ⊙ | ⊙ | ⊙ | ⊙ |

# EP 1 591 501 A1

Table 4 (Comparative Examples)

| | | Comparative Examples | | | | | | | | |
|---|---|---|---|---|---|---|---|---|---|---|
| | | 1 | 2 | 3 | 4 | 5 | 6 | 7 | 8 | 9 |
| Mixed Solvent Production Example | | 4 | 5 | 6 | 7 | 1 | 1 | 1 | 1 | 1 |
| Epoxy Resin Production Example | | 9 | 9 | 9 | 9 | 14 | 15 | 9 | 9 | 9 |
| Component A/component B (solids content ratio by weight) | | 85/15 | 85/15 | 85/15 | 85/15 | 85/15 | 85/15 | 65/35 | 96/4 | 100/0 |
| Evaluation results of coating film | Outward appearance of resin | good | good | sepa-rated | sepa-rated | gel-like | gelled | good | good | good |
| | Resin viscosity (mP·a) | 500 | 600 | | | not meas-urable | not meas-urable | 600 | 1000 | 600 |
| | Corrosion resistance | × | × | not capable of evalu-ation | not capable of evalu-ation | not capable of evalu-ation | not capable of evalu-ation | xx | O | Δ |
| | Moisture resistance | O | × | | | | | xx | O | × |
| | Processability | × | O | | | | | O | xx | xx |
| | Scratching | × | × | | | | | xxx | Δ | × |
| | Impact resistance | O | O | | | | | Δ | × | Δ |
| | Pencil strength | B | B | | | | | B | 2H | 2H |
| | Adhesiveness | Δ | Δ | | | | | Δ | O | O |

Table 5

| (Composition of mixed solvent) | | | | | | | | | | | |
|---|---|---|---|---|---|---|---|---|---|---|---|
| Solvent | Rate of evaporation (Vi) | Sp value (SPi) | Production Example 16 | Production Example 17 | Production Example 18 | Production Example 19 | Production Example 20 | Production Example 21 | Production Example 22 | Production Example 23 |
| PMA | 34 | 9.2 | 15 | 15 | 15 | 15 | 55 | | 10 | 15 |
| Butyl acetate | 100 | 8.5 | | | | | | | 5 | 20 |
| n-BA | 45 | 11.4 | | | | | | | 40 | |
| MA | 15 | 8.9 | 5 | 5 | | | | | | 10 |
| Ethyl acetate | 525 | 9.1 | 30 | 25 | 30 | 30 | 5 | 50 | | 5 |
| PM | 66 | 10.2 | 30 | 20 | 25 | 15 | 20 | | | |
| sec-BuOH | 115 | 10.8 | 20 | 15 | 20 | 15 | 10 | 5 | | |
| Isobutyl acetate | 152 | 8.3 | | 20 | 5 | 20 | 5 | 10 | | 20 |
| PEAC | 22 | 8.6 | | | 5 | 5 | 5 | | | 20 |
| IPA | 205 | 11.5 | | | | | | 5 | 45 | |
| MEK | 465 | 9.3 | | | | | | 20 | | |
| MCH | 320 | 8.2 | | | | | | 10 | | 10 |
| Physical properties of mixed solvent | Rate of evaporation (V) | | 206 | 198 | 211 | 221 | 78 | 418 | 119 | 120 |
| | Sp value (SP) | | 9.78 | 9.42 | 9.67 | 9.35 | 9.48 | 9.18 | 11.1 | 8.63 |

EP 1 591 501 A1

Table 6

| (Composition of diluting solvent) | | |
|---|---|---|
| Solvent | Production Example 24 | Production Example 25 |
| Cyclohexanone | 50 | 10 |
| Ethyl acetate | 50 | 90 |

Table 7 (Composition of epoxy resin)

| | | | Production Examples 26 | Production Examples 27 | Production Examples 28 | Production Examples 29 | Production Examples 30 | Production Examples 31 | Production Examples 32 |
|---|---|---|---|---|---|---|---|---|---|
| (a) Epoxy resin | | BP-A | 1000 | – | 1000 | – | 1000 | – | 1000 |
| | | BP-F | – | 1000 | – | 1000 | – | 1000 | – |
| | | Epoxy equivalent (g/eq) | 450 | 450 | 650 | 650 | 650 | 550 | 550 |
| (b) Multifunctional amine | b1 | i-PA | 95 | 79 | – | – | – | – | 130 |
| | | MEA | – | – | 43 | 58 | 40 | 50 | – |
| | | Active hydrogen equivalent (g/eq) | 37.5 | 37.5 | 30.5 | 30.5 | 30.5 | 30.5 | 37.5 |
| | b2 | PA | – | 12. | – | – | – | 5 | – |
| | | BA | – | – | 43 | – | 26 | – | – |
| | | Active hydrogen equivalent (g/eq) | – | 29.5 | 30.5 | – | 36.5 | 29.5 | – |
| | Component b1/component b2 (equivalent ratio) | | 1.0 | 0.84/0.16 | 0.80/0.20 | 1.0 | 0.65/0.35 | 0.91/0.09 | 1.0 |
| Active hydrogen in component (b)/epoxy group in component (a) (equivalent weight) | | | 1.14 | 1.13 | 1.15 | 1.23 | 1.29 | 1.00 | 1.70 |
| Number-average molecular weight of amine modified epoxy resin | | | 7000 | 7000 | 9000 | 6000 | 9000 | gelled | 8500 |

Table 8 (Examples)

| | | Examples | | | | | | | | | |
|---|---|---|---|---|---|---|---|---|---|---|---|
| | | 10 | 11 | 12 | 13 | 14 | 15 | 16 | 17 | 18 | 19 |
| Mixed Solvent Production Example | | 1 | 1 | 1 | 1 | 1 | 1 | 2 | 2 | 3 | 4 |
| Diluting Solvent Production Example | | – | 9 | – | 9 | – | – | – | 9 | – | – |
| Epoxy Resin Production Example | | 11 | 11 | 12 | 12 | 13 | 14 | 11 | 11 | 11 | 11 |
| Evaluation results of coating film | Outward appearance of resin | good | good | good | good | good | good | good | good | good | good |
| | Resin viscosity (mP·a) | 3000 | 2500 | 2700 | 2200 | 3300 | 2800 | 2900 | 2300 | 3100 | 3000 |
| | Corrosion resistance | ⊙ | ⊙ | ⊙ | ⊙ | ⊙ | ⊙ | ⊙ | ⊙ | ⊙ | ⊙ |
| | Moisture resistance | ⊙ | ⊙ | ⊙ | ⊙ | ⊙ | ⊙ | ⊙ | ⊙ | ⊙ | ⊙ |
| | Processability | ⊙ | ⊙ | ⊙ | ⊙ | ⊙ | ⊙ | ⊙ | ⊙ | ⊙ | ⊙ |
| | Scratching | ○ | ○ | ○ | ○ | ○ | ○ | ○ | ○ | ○ | ○ |
| | Impact resistance | ⊙ | ⊙ | ⊙ | ⊙ | ○ | ○ | ○ | ○ | ⊙ | ⊙ |
| | Pencil strength | 2H | 2H | 2H | 2H | H | H | 2H | 2H | 2H | 2H |
| | Adhesiveness | ○ | ○ | ○ | ○ | ○ | ○ | ○ | ○ | ○ | ○ |

Table 9 (Comparative Examples)

| | | Comparative Examples | | | | | | | | | |
|---|---|---|---|---|---|---|---|---|---|---|---|
| | | 10 | 11 | 12 | 13 | 14 | 15 | 16 | 17 | 18 | 19 |
| Mixed Solvent Production Example | | 5 | 5 | 6 | 7 | 8 | 1 | 2 | 1 | 1 | 1 |
| Diluting Solvent Production Example | | – | 10 | – | – | – | 10 | 10 | – | – | – |
| Epoxy Resin Production Example | | 11 | 11 | 11 | 11 | 11 | 11 | 11 | 15 | 16 | 17 |
| Evaluation results of coating film | Outward appearance of resin | good | turbid, sepa-rated | good | separated | separated | turbid, sepa-rated | turbid, sepa-rated | good | not meas-urable due to gela-tion | good |
| | Resin viscosity (mP·a) | 1000 | | 2700 | | | | | 2300 | | 3000 |
| | Corrosion resistance | ×× | | ×× | | | | | ×× | | Δ |
| | Moisture resistance | ×× | not meas-urable | × | not meas-urable | not meas-urable | not meas-urable | not meas-urable | × | | ×× |
| | Processability | Δ | | ⊙ | | | | | × | | Δ |
| | Scratching | × | | ○ | | | | | × | | Δ |
| | Impact resistance | Δ | | ⊙ | | | | | × | | Δ |
| | Pencil strength | H | | 2H | | | | | H | | H |
| | Adhesiveness | ×× | | ○ | | | | | × | | ⊙ |

Industrial Applicability

According to the present invention, there can be provided a non-aromatic solvent-based coating resin composition excellent in adhesion to a material, corrosion resistance, processability, scratch resistance, corrosion resistance and solvent resistance with good balance among these properties.

**Claims**

1. A non-aromatic solvent-based modified epoxy coating resin composition **characterized by** being dissolved in a solids content of 60% or less in a non-aromatic solvent selected according to condition (i):

   Condition (i): a mixed solvent wherein every selected solvent is a non-aromatic solvent, satisfies the following equation (1), and shows a viscosity of 10, 000 mPa·S or less upon forming a solution wherein the solids content of the modified epoxy resin composition dissolved in the solvent is 40%,

   $$\text{Equation (1):} \quad 9.0 \leq SP \leq 11.0$$

   wherein SP is $\Sigma C_i SP_i$ whereupon $C_i$ (wt%) is the content of the selected solvent in the whole solvent, and $SP_i$ is the SP value of the selected solvent.

2. An one-pack thermosetting coating resin composition, wherein in claim 1, 95 to 70 parts (solids content) by weight of component A and 5 to 30 parts (solids content) by weight of component B are mixed in a total amount of 100 parts by weight (solids content), and 60% or less of the solids content is dissolved in the non-aromatic solvent selected according to condition (ii):

   Component A: a modified epoxy resin composition containing (a) epoxy resin having an epoxy equivalent of 300 to 3,000 g/eq and (b) multifunctional amine, wherein active hydrogen in the component (b) is 1.10 to 1.80 equivalents relative to 1.0 epoxy equivalent in the component (a),
   Component B: block isocyanate,
   Condition (ii): every selected solvent is a non-aromatic solvent and satisfies the following equation (2):

   $$\text{Equation (2):} \quad V = \Sigma C_i V_i$$

   wherein V is $18 \leq V \leq 100$ whereupon $C_i$ (wt%) is the content of the selected solvent in the whole solvent, and $V_i$ is the evaporation rate of the selected solvent, which is a relative rate assuming that the evaporation rate of butyl acetate is 100.

3. A coating resin composition drying at ordinary temperatures,
   wherein the modified epoxy resin composition in claim 1 comprising amine modified epoxy having a number-average molecular weight of 4, 000 to 10, 000 obtained by adding (a) epoxy resin having an epoxy equivalent of 200 to 1,000 g/eq to (b) multifunctional amine, wherein active hydrogen in the component (b) is 1.10 to 1.60 equivalents relative to 1.00 epoxy equivalent in the component (a), satisfies condition (iii):

   Condition (iii): every selected solvent is a non-aromatic solvent and satisfies the following equation (3):

   $$\text{Equation (3):} \quad V = \Sigma C_i V_i$$

   wherein V is $100 \leq V \leq 300$ whereupon $C_i$ (wt%) is the content of the selected solvent in the whole solvent, and $V_i$ is the evaporation rate of the selected solvent, which is a relative rate assuming that the evaporation rate of butyl acetate is 100.

4. The coating resin composition drying at ordinary temperatures according to claim 3, wherein the multifunctional amine (b) is a multifunctional alkanol amine (b1).

5. The coating resin composition drying at ordinary temperatures according to claim 3 or 4, wherein the multifunctional amine (b) is a mixture of the multifunctional alkanol amine (b1) and another multifunctional amine (b2), and the equivalent ratio of these components is 0.70 to 1.00/0 to 0.30 wherein the total of both the components is 1.00 equivalent.

6. The one-pack thermosetting coating resin composition or the ordinary-temperature-drying coating resin composition according to any one of claims 2 to 5, wherein the epoxy resin (a) is bisphenol A-diglycidyl ether or bisphenol F-diglycidyl ether.

7. A coating resin composition drying at ordinary temperatures, which comprises the coating resin composition drying at ordinary temperatures according to any one of claims 3 to 6 in combination with a diluting solvent which as a solvent added to the coating composition drying at ordinary temperatures is selected according to condition (iv-1):

Condition (iv-1): a non-aromatic mixed solvent containing at least 20 wt% cyclohexanone in the solvent.

**INTERNATIONAL SEARCH REPORT**

| International application No. |
| --- |
| PCT/JP2004/001057 |

**A. CLASSIFICATION OF SUBJECT MATTER**
Int.Cl$^7$ C09D163/00, C09D175/04

According to International Patent Classification (IPC) or to both national classification and IPC

**B. FIELDS SEARCHED**

Minimum documentation searched (classification system followed by classification symbols)
Int.Cl$^7$ C09D163/00-163/10, C09D175/04-175/16, C08L63/00-63/10,
C08L75/04-75/16

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 8-183834 A (Dainippon Ink And Chemicals, Inc.), 16 July, 1996 (16.07.96), Claims; Par. No. [0001]; example 2 (Family: none) | 1-7 |
| A | JP 2000-34438 A (Kansai Paint Co., Ltd.), 02 February, 2000 (02.02.00), Claims; examples (Family: none) | 2,6 |
| A | JP 8-134403 A (Mitsui Toatsu Chemicals, Inc.), 28 May, 1996 (28.05.96), Claims; examples (Family: none) | 3-7 |

| ☐ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17 May, 2004 (17.05.04) | 01 June, 2004 (01.06.04) |

| Name and mailing address of the ISA/ Japanese Patent Office | Authorized officer |
| --- | --- |
| Facsimile No. | Telephone No. |

Form PCT/ISA/210 (second sheet) (January 2004)